# EUROPEAN PATENT APPLICATION

(11) **EP 2 796 894 A1**
(43) Date of publication of application: **29.10.2014**
(21) Application number: 11877776.2
(22) Date of filing: 22.12.2011
(51) Int. Cl.: G01S 17/10

(54) **OPTICAL WAVE DISTANCE MEASUREMENT DEVICE**

(71) Applicant: Sick Optex Co., Ltd., Kyoto-shi, Kyoto 600-8815 (JP)
(72) Inventor: YUGUCHI, Tasuku, Kyoto-shi Kyoto 600-8815 (JP); NAKATA, Osamu, Kyoto-shi Kyoto 600-8815 (JP)
(74) Representative: Bugnion Genève
(86) International application number: PCT/JP2011/079862
(87) International publication number: WO 2013/094062

(57) **Abstract**

A projected light pulse generating circuit (6a, 6b) generates the plural pairs of the projected light pulses, which are projected light pulses having respective predetermined pulse widths and which have at least two type of different pulse intervals. A projected light pulse selector circuit (7) periodically selects and outputs each pair of the projected light pulses having different pulse intervals. A distance determining circuit (15) compares the farness or nearness of each of the measured distance, where the plural distances each measured for the projected light pulses of the pulse interval, and determines a detected distance on the basis of one of a far measured distance and a near measured distance, which is excluded in dependence on the timing of the pulse detection.

## Description

### BACKGROUND OF THE INVENTION

### (Field of the Invention)

The present invention relates to an optical wave distance measurement device for measuring the distance from the distance measurement device to a measurement object to be measured by the utilization of reflection of rays of light.

### (Description of Related Art)

In general, the optical wave distance measurement device is so designed and so configured as to receive a beam of light projected from a light projecting unit and subsequently reflected from a measurement object or target to be measured and as to measure the distance from the position of the optical wave distance measurement device to the measurement object on the basis of a delay time in pulse detection which takes place during the time span between the beam projection from the optical wave distance measurement device and the beam receipt by the optical wave distance measurement device, and is a device for converting the length of time, required for the beam to travel from and back to the optical wave distance measurement device, into the distance.

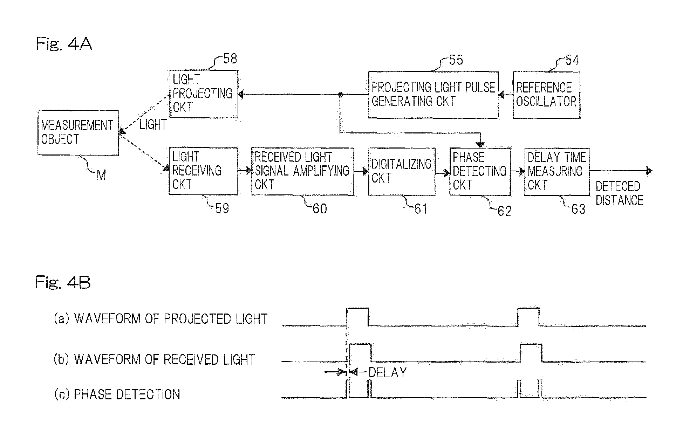

Fig. 4A illustrates a basic structure of the conventional optical wave distance measurement device and Fig. 4B illustrates waveforms appearing in the optical wave distance measurement device shown in Fig. 4A. As shown in Fig. 4A, the conventional optical wave distance measurement device is so designed that a projecting light pulse (projecting light) of a predetermined pulse width, which is generated by a projecting pulse generating circuit 55 on the basis of a predetermined reference frequency fed from a reference oscillator 54 in a light projecting unit 1, can be projected from a light projecting circuit 58 towards a measurement object to be measured M and the light reflected from the measurement object M is then received by a light receiving circuit 59 of a light receiving unit 2 after a certain length of time delayed in dependence on the distance between the optical wave distance measurement device to the measurement object M. The light received by the light receiving circuit 59 is, after having been amplified by a received light signal amplifying circuit 60 to a required amplitude, digitalized by a digitalizing circuit 61 and is then subsequently supplied to a phase detecting circuit 62.

In the phase detecting circuit 62, a phase lag (a phase delay shown in chart (c) of Fig.4B) between the waveform of the projected light, shown in chart (a) of Fig.4B, and the waveform chart of the received light, shown in chart (b) of Fig.4B. The measured phase delay is converted by a delay time measuring circuit 63 to calculate the distance to the measurement object M and the detected distance is thereafter outputted.

For the projecting light pulse generated by the light projecting circuit, either an architectonically single pulse or a train of successive pulses for the purpose of, for example, increasing the response speed has hitherto been employed. See, for example, the Patent Document 1 listed below. Also, in a condition in which a plurality of instruments each operable to emit a train of successive pulses, in order to avoid an undesirable interference with any other instruments, an instrument has been known in which a plurality of pulses are emitted in consecutive clusters for displacing and adjusting the light projecting timing (In this respect, see the Patent Document 2 listed below.).

### [Prior Art Literature]

[Patent Document 1] JP Laid-open Patent Publication No. 2006-064641
[Patent Document 2] JP Laid-open Patent Publication No. 2006-003127

### DISCLOSURE OF THE INVENTION

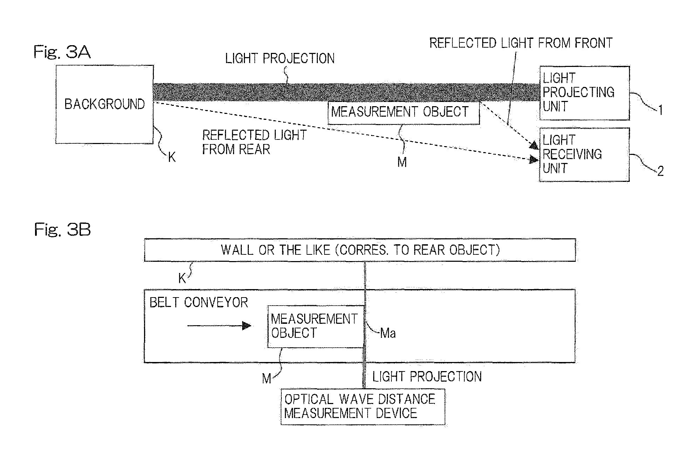

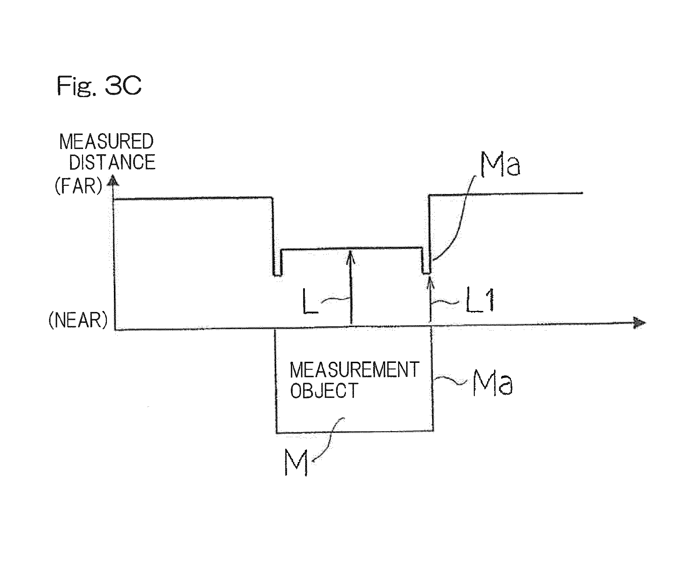

In the meantime, in the event that when the light projected from the projecting unit 1 is received by the light receiving unit 2 after having been reflected from the measurement object M positioned forwards, a plurality of projecting pulses are projected at a predetermined pulse interval as shown in Fig. 3A, not only the light reflected from the measurement object M, but also light reflected from a separate object K positioned rearwardly of the measurement object M may be received and, hence, the result of measurement may be adversely affected particularly when the difference in time lag between those two reflected lights is small enough to approximate the pulse interval. Even when as shown in Fig. 3B, an end face Ma of the measurement object M is to be measured in order to detect the presence or absence of a moving object placed on a belt conveyor, a similar phenomenon occurs at the end face Ma by the effects of the reflected light from the measurement object M and the separate object K rearwardly of the measurement object M.

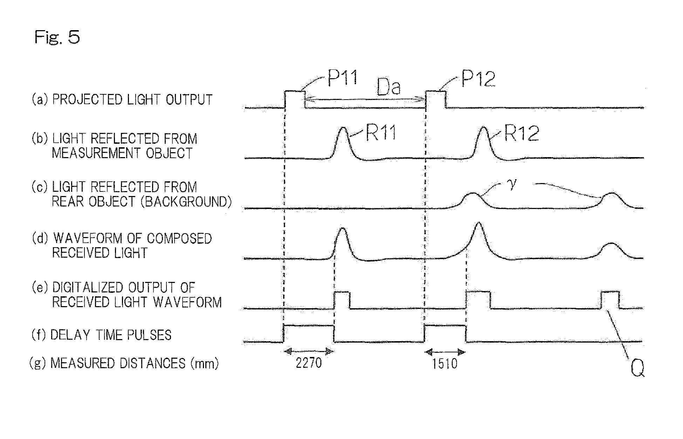

Fig. 5 illustrates measurement waveforms appearing in the presence of the light reflected from the separate object K positioned rearwardly of the measurement object M. In particular, the first projected light output P11 shown in chart (a) of Fig. 5 brings in the light receiving unit 2 about the waveform of the first reflected light R11 from the measurement object M as shown in chart (b) of Fig. 5. The delay (phase delay) in timing of the light receiving from the timing of the light projecting increases in proportion to the distance between the light projecting unit 1 and the light receiving unit 2 to the measurement object M. On the other hand, the light γ, which is the first projected light output P11 having been reflected from the rear object K, is received by the light receiving unit 2 at a timing further delayed as shown in chart (c) of Fig. 5. A composite waveform formed by the reflected light R11 and R12 and the reflected light γ is shown in chart (d) of Fig. 5. Since with the first reflected light R11 from the measurement object M the reflected light γ is not affected, the distance to the measurement object M can be accurately measured and the delayed time pulse shown in chart (f) of Fig. 5 has a pulse width proportional to the distance to the measurement object M. The waveform chart (g) of Fig. 5 represents one example of the distance of 2,270 mm measured in accordance with the pulse width.

It has however been found that since as shown in chart (d) of Fig. 5, the second reflected light R12 from the measurement object M is composited with the reflected light γ from the rear object K, the received light waveform rises earlier than the original delay time. For this reason, the falling of the delay time pulse shown in chart (f) of Fig. 5 is facilitated and, as a result, the measured distance is reduced to 1,510 mm as shown in chart (g) of Fig. 5. It is however to be noted that in the example discussed above, in the digitalized output shown in chart (e) of Fig. 5, the reflected light γ from the rear object K appears as an independent pulse Q and the pulse number of the digitalized output becomes three times which is greater than the two times of the pulse number which have been originally projected. For this reason, when as a result of counting of this pulse number, it exceeds two times, it can be determined that it contains an invalid measured distance.

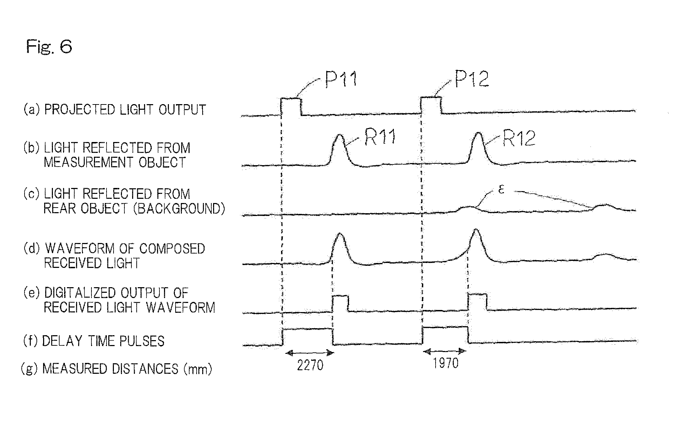

It has, however, been found that the intensity of the reflected light from the rear object K changes considerably with change in position of the measurement object M and/or the reflectance of a surface thereof and that as the reflected light ε from the rear object K decreases as shown in chart (c) of Fig. 6, such a pulse Q as shown in chart (e) of Fig. 5 may be no longer detected. Even in such case, since the waveform shown in chart (d) of Fig. 6 rises quickly immediately after receipt of the reflected light ε from the rear object K, the rising of the digitalized output waveform shown in chart (e) of Fig. 6 is accelerated and, hence, the result is a slightly short measured distance as shown in chart (g) of Fig. 6. Such a manner of change of the reflected light from the rear object K tends to pose a problem at the time of measurement of the measurement object M then moving as shown in Fig. 3B, rather than at the time of measurement of the measurement object M held at a halt as shown in Fig. 3A. At this time, the distance L1 measured at the end face Ma of the measurement object M is reduced to a value L which is smaller than the distance L measured at any other portion other than the end face Ma, that is, L1 < L.

In contrast thereto, it may be contemplated to increase the interval between the first projected light pulse and the second projected light pulse and also to avoid an overlap of the reflected light of the first projected light pulse from the rear object K over the reflected light of the second projected light pulse from the measurement object M. It has however been found that this contemplated method tends to reduce the number of times of light projections per unitary time and, therefore, the length of time required to accomplish the measurement tends to increase. It may be also contemplated that in order to avoid the overlap between the reflected lights the reflected lights are filtered, but the response time tends to be retarded as a result of the filtering, resulting in an increase of the length of time required to accomplish the measurement.

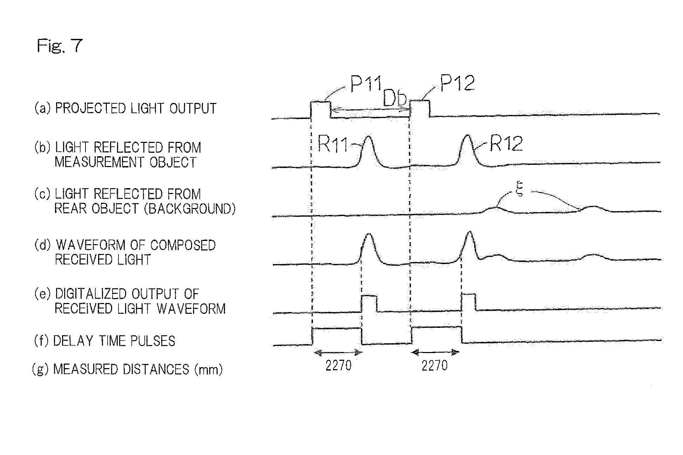

On the other hand, it may be further contemplated to decrease the interval between the first projected light pulse and the second projected light pulse. As shown in chart (a) in Fig. 7, the pulse interval Db between the projected light pulses P11 and P12 is smaller than the pulse interval Da shown in chart (a) of Fig. 5, that is, Db < Da. In such case, as a result that a portion where the reflected light from the front measurement object M overlaps the second projected light pulse R12 changes, the timing at which the waveform of the reflected light ε from the rear object K shown in chart (c) of Fig. 7 rises is neither affected nor the measured distance is affected as shown in chart (g) of Fig. 7.

However, each time the relation in position between the front measurement object M and the rear object K changes and/or reflection from a separate rear object occurs, it is necessary to change the pulse interval of the projected light pulse so as to avoid any influence brought about by the reflection from the rear object, resulting in a difficulty in a complicated countermeasure.

The present invention has been devised to substantially eliminated the problems and inconveniences hereinabove discussed and is intended to provide an optical wave distance measurement device of a simplified structure which is effective to avoid an erroneous detection of a measurement object, which would be brought about by influences of reflection from a rear object, by reducing the length of time required to complete the measurement regardless of the distance between the measurement object and the rear object positioned rearwardly of such measurement object.

In order to accomplish the foregoing object of the present invention, an optical wave distance measurement device designed in accordance with the present invention is for sequentially projecting a plurality of pairs of projected light pulses, receiving light reflected from an object to be measured and measuring the distance to the object to be measured on the basis of a delay time of pulse detection during a period from projection of light to receipt of light, which device includes a projected light pulse generating circuit for generating the plural pairs of the projected light pulses, which pairs have are at least two pulse intervals different to each other among the plural pairs, each pair having respective predetermined pulse width; a projected light pulse selector circuit for periodically selecting and outputting selected pair of the projected light pulses; a light projecting circuit for projecting the selected projected light pulse towards the object to be measured; and a distance determining circuit for comparing the farness or nearness of each of the measured distance, where the plural distances are measured one for each pair of the projected light pulses of the different pulse intervals, and determining a detected distance on the basis of the plural measured distances in which one of a far measured distance and a near measured distance is excluded in dependence on the timing of the pulse detection.

According to the above described construction, since the pairs of the projecting light pulses having the different pulse intervals are selectively projected and the detected distance is determined based on the plural measured distances in which one of a far measured distance and a near measured distance is excluded in dependence on the timing of pulse detection, in the event that the measured distances differ from each other because of the influence brought about by reflection from the rear object rearwardly of the measurement object, the measured distance so affected by such influence is excluded and the detected distance can be obtained based on the measured distance free from such influence. Also, since the detected distance with no erroneous detection can be obtained if one of the far measured distance and the near measured distance is excluded, the length of time required to complete the measurement can be reduced. Therefore, regardless of the distance between the measurement object and the rear object, the erroneous detection, which would be brought about by the influence of reflection of the rear object rearwardly of the measurement object can be avoided with a simplified construction and the length of time required to complete the measurement can be reduced.

In a preferred embodiment of the present invention, where the timing of the pulse detection is a rising edge of the pulse of the light projection and the light receipt, the distance determining circuit determines the detected distance on the basis of the plural measured distances in which the near measured distance is excluded. Accordingly, by detecting the rising edge of the pulse, which has a minimized circuit delay time, the length of time required to complete the measurement can be further reduced.

In another preferred embodiment of the present invention, when the difference between the measured distances is smaller than a predetermined value, the distance determining circuit determines an average value of all of those measured distances as the detected distance. Accordingly, in the case of the measurement that is not affected by the influence of reflection from the rear object, there is no need to perform the measured distance excluding process and, therefore, the length of time required to complete the measurement can be still further reduced.

Since in the present invention, the pairs of the projecting light pulses having the different pulse intervals are selectively projected and the detected distance is determined based on the plural measured distances in which either one of the far measured distance or the near measured distance is excluded in dependence on the timing of pulse detection, in the event that the measured distances differ from each other because of the influence brought about by reflection from the rear object rearwardly of the measurement object, the measured distance so affected by such influence is excluded and the detected distance can be obtained based on the measured distance free from such influence. Also, since the detected distance with no erroneous detection can be obtained if one of the far measured distance and the near measured distance is excluded, the length of time required to complete the measurement can be reduced.

It is to be noted that any combination of a least two structures disclosed in the claims and/or the specification and/or the accompanying drawings are to be construed as included within the spirit of the present invention. In particular, any combination of two or more of the claims annexed hereto is to be construed as included within the spirit of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a structural diagram showing an optical wave distance measurement device designed in accordance with a preferred embodiment of the present invention;
Fig. 2 is a characteristic chart showing the operation of the optical wave distance measurement device shown in Fig. 1;
Figs. 3A and 3B are top plan views showing one example of the manner of reflection of light from a rear object, positioned rearwardly of a measurement object, in the optical wave distance measurement device;
Fig. 3C is a structural diagram showing one example of an influence brought about by reflected light shown in Fig. 3B;
Fig. 4A is a diagram showing a basic structure of the conventional optical wave distance measurement device;
Fig. 4B is a diagram showing measurement waveforms appearing in the conventional optical wave distance measurement device of Fig. 4A;
Fig. 5 is a diagram showing waveforms appearing during the presence of reflected light from the rear object rearwardly of the measurement object in the conventional art;
Fig. 6 is a diagram showing waveforms appearing during the presence of reflected light from the rear object rearwardly of the measurement object in the conventional art; and
Fig. 7 is a diagram showing waveforms appearing during the presence of reflected light from the rear object rearwardly of the measurement object in the conventional art.

### DESCRIPTION OF PREFERRED EMBODIMENTS

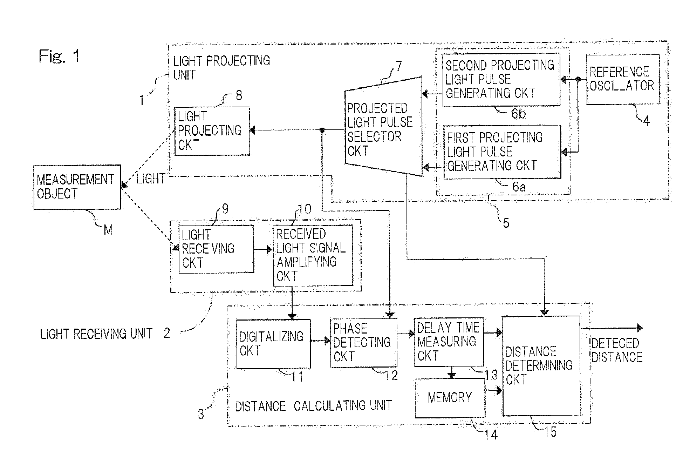

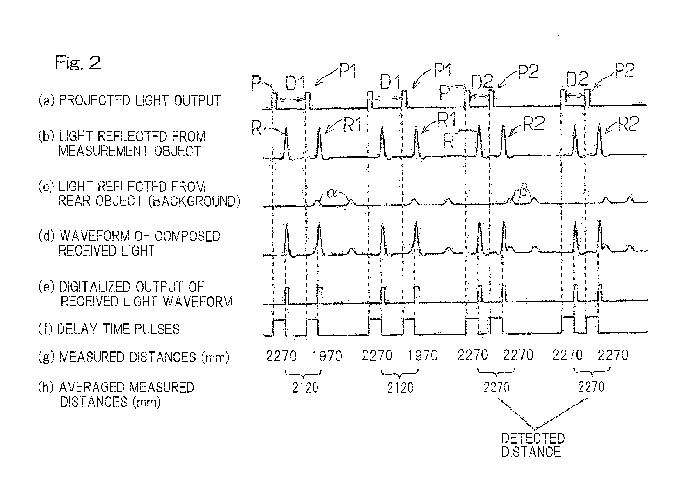

Hereinafter, a preferred embodiment of the present invention will be described in detail with reference to the accompanying drawings. In particular, Fig. 1 illustrates a structural diagram of an optical wave distance measurement device according to the preferred embodiment of the present invention and Fig. 2 is a characteristic diagram showing one example of the operation of the optical wave distance measurement device. As shown in Fig. 1, the optical wave distance measurement device includes a light projecting unit 1 for successively projecting a plurality of pairs of projected light pulses towards an object M to be measured, hereinafter referred to as a measurement object M, a light receiving unit 2 for receiving light of the projected light pulses, which has been reflected from the measurement object M, and a distance calculating unit 3 for measuring the distance to the measurement object M on the basis of a delay time in pulse detection that has occurred from light projection to light receipt.

The light projecting unit 1 includes a reference oscillator 4, a projecting light pulse generating subunit 5, a projected light pulse selector circuit 7 and a light projecting circuit 8. The reference oscillator 4 generates a reference signal of a predetermined frequency. The projecting light pulse generating subunit 5 generates a projecting light having a predetermined pulse width on the basis of the reference signal from the reference oscillator 4. The projecting light pulse generating subunit 5 is of a type capable of generating, for example, two pairs of projecting light pulses having two different types of pulse intervals and is made up of a first projecting light pulse generating circuit 6a for generating the projecting light pulses of a wide pulse interval and a second projecting light pulse generating circuit 6b for generating the projecting light pulses of a narrow pulse interval. The first projecting light pulse generating circuit 6a generates a pair of projecting light pulses P1 comprised of two projecting light pulses P having a wide pulse interval D1 therebetween, and the second projecting light pulse generating circuit 6b generates a pair of projecting light pulses P2 having a narrow pulse interval D2 which is smaller than the pulse interval D1, that is, D1 > D2.

If reflection of light occurs from a rear object K positioned rearwardly of the measurement object M when the projecting light pulses are emitted towards the measurement object M, and in the event that the difference in delay time between the light reflected from the measurement object M and the rear object K is nearly equal to the pulse interval of the pair of the projecting light pulses, an erroneous detection will occur as a result of influences of the light reflection from the rear object K. In other words, the influences of the light reflection from the rear object K depends on the pulse interval of the two projected light pulses and the length of time that has passed from the time of reflection of light from the rear object K to the time of the reflected light received, that is, the distance between the measurement object M and the rear object K. For this reason, the pulse intervals D1 and D2 of the projected light pulses P1 and P2 are selected in dependence on the relation in position between the measurement object M and the rear object K. By way of example, referring to the waveform shown in chart (d) of Fig. 2, the influence of the reflected light from the rear object K is occurring on the projected light pulses P1 of the wide pulse interval, but if the distance between the measurement object M and the rear object K is small, no influence occurs on the projected light pulses P1 of the wide pulse interval, but the influence of the reflected light from the rear object K occurs on the projected light pulses P2 of the narrow pulse interval. Accordingly, even though the farness or nearness exists between the measurement object M and the rear object K, it is possible to obtain a detected distance free from the influence of the reflected light from the rear object K with the projected light pulses of any of the wide and narrow pulse intervals.

The light projecting circuit 8 best shown in Fig. 1 is made up of a light projecting element (not shown) such as, for example, a laser diode for projecting a projected light signal towards the measurement object M and a projecting light drive circuit (not shown) for driving the light projecting element with projected light pulses supplied from respective projecting light pulse generating circuits 6a and 6b and is operable to project projected light pulses, which have been switched by a projecting light pulse selector circuit 7.

The light receiving subunit 2 referred to above is made up of a light receiving circuit 9 having a light receiving element such as, for example, a photodiode for receiving a signal projected from the light projecting circuit 1 and subsequently reflected from the measurement object M and a received light signal amplifying circuit 10 for amplifying the signal received thereby.

The projecting light pulse selector circuit 7 is operable to periodically switch the pairs of the projected light pulses of the different pulse intervals and then to output a plurality of pairs of projected light pulses which have been combined in a predetermined sequence. In the instance as shown, two pairs of projecting light pulses P1 and P2 having two different types of pulse intervals are combined in the sequence of P1-P1-P2-P2 and are then projected, but the sequence and the number of projected lights are not necessarily limited thereto and either alternate or random projection of light pulses P1 and P2 may be made. Also, the number of projections of the light pulses P1 and P2 may be, for example, three or more times.

The distance calculating unit 3 is made up of a digitalizing circuit 11, a phase detecting circuit 12, a delay time measuring circuit 13, a memory 14 and a distance determining circuit 15. The projected light pulse selector circuit 7 is operable to select one of the two pairs of the projected light pulses P1 and P2 having the two type of the pulse intervals and then to output the selected pairs of the projected light pulses to the light projecting circuit 8 and the phase detecting circuit 12. Also, a signal indicative of the selected projected light pulses P1 or P2 is outputted to the distance determining circuit 15.

The digitalizing circuit 11 of the distance calculating unit 3 is operable to digitalize the amplified and received light signal. The phase detecting circuit 12 is operable to detect a displacement in phase between the projected light pulse (projected light signal), which has been selected by the projected light pulse selector circuit 7, and the received light signal which has been digitalized by and fed from the digitalizing circuit 11. The delay time measuring circuit 13 is operable to calculate the measurement distance to the measurement object M by converting the displacement in phase (phase delay) between those two signals. The memory 14 is operable to store past delay times such as the delay time about the plurality of the projected light pulses P1 and P2 measured immediately therebefore.

The distance determining circuit 15 referred to previously is operable to compare farness and nearness of measured distances, if those distances each measured for the projected light pulses of a different pulse interval, and to determine the detected distance based on the plural measured distances in which either the far measured distance or the near measured distance is excluded in dependence on the timing of pulse detection. Referring to the waveform of the projected light in chart (a) of Fig. 2 and the waveform of the received light in chart (b) of Fig. 2, where the timing of pulse detection is at, for example, the respective rising edges of the pulses of the projected light pulses P and the received light pulses R, the distance determining circuit 15 best shown in Fig. 1 excludes one of the measured distances, which is a near measured distance and determines the detected distance based on the other measured distance. As compared with the falling edge of the pulse, the detection of the rising edge of the pulse requires a rather small delay time on the circuitry and is effective to further reduce the measurement time. In the instance as shown, measured distance, resulting from the delay time measured about the projected light pulses P1 and P2, and the measured distance, resulting from the past delay time stored in the memory 13 are compared with each other and the measured distance, which is smaller than a predetermined value, is excluded (invalidated and the measured distances other than that are averaged before the detected distance is outputted.

Hereinafter, one example of the operation of the optical wave distance measurement device will be described with particular reference to Fig. 2. In the instance as shown, the accurate detected distance is obtained by measuring the distance with the two pairs of the projected light pulses P1 and P2 of the different projecting light intervals and, then, excluding the measured distance detected erroneously under the influence of the reflected light from the rear object K due to difference in measurement results. In the waveform shown in chart (a) of Fig. 2, from the light projecting unit 1, one pair of the projected light pulses P1 having the wide pulse interval D1 are projected two times, followed by two times projection of one pair of the projected light pulses P2 having the narrow pulse interval D2 smaller than the wide pulse interval D1.

Although for the purpose of illustration, one pair of the projected light pulses (blocks) P1 and one pair of the projected light pulses (blocks) P2 have shown as projected two times, it is preferred for each of the pair of the projected light pulses P1 and the pair of the projected light pulses P2 to be projected three or more times and, by increasing the number of averaging times of the measured distances, the stabilized detected distance with no erroneous detection being accompanied can be obtained.

In the waveform shown in chart (b) in Fig. 2, the projected light outputs P1 and P2, shown in chart (a) of Fig. 2 and projected from the light projecting unit 1, are reflected from the measurement object M and, as a result, respective waveforms of the reflected light R1 and R2 are incident on the light receiving unit 2. On the other hand, the light reflected from the rear object K are incident on the light receiving unit 2 after having been further delayed as shown in chart (c) of Fig. 2. Since the reflected light α and β are composed in the light receiving unit 2, the waveforms appearing at the light receiving unit 2 are such as shown in chart (d) of Fig. 2. At the time of the first and second projected light outputs P1 of the wide pulse interval, the reflected light α from the rear object K is composed and is affected thereby, but at the time of the third and fourth projected light outputs, no influence is received from the reflected light β.

From the phase displacement between the projected light output, shown in chart (a) of Fig. 2, and the digitalized output of the received light waveform shown in chart (e) of Fig. 2, the delay time shown in chart (f) of Fig. 2 is measured, the distance measured in dependence on this pulse width is shown in chart (g) of Fig. 2, and, in the instance now under discussion, the measured distances obtained by the pairs of the projected light pulses are averaged, the result of which is shown in chart (h) of Fig. 2. By this averaging, it is possible to minimize influences which would be brought about by an external disturbing light and/or noises. As a result thereof, the measured distance at the time of the projected light outputs P1 of the wide pulse interval becomes small as compared with that at the time of the projected light outputs P2 of the narrow pulse interval.

This has resulted from the fact that, where a delay time pulse shown in chart (f) of Fig. 2 is to be generated in response to the rising of the projected light output and the received light waveforms as the timing for pulse detection, an erroneous detection, which would increase the detected distance, does not occur in principle because the reflected light from the rear object K overlaps over the rising side of the received light waveform. For this reason, where the distances measured with the wide projected light pulse interval and the narrow projected light pulse interval are different from each other, the distance measured as small will be a measured distance that is erroneously detected. In view of this, from the four measured distances that are averaged as shown in chart (h) of Fig.2, data of 2,120 mm on the short measured distance that is erroneously detected is excluded and the detected distance of 2,270 mm can be obtained based on the remaining measured distances.

In this way, with the timing of pulse detection of the projected light and received light set as the rising edge of the pulse, if the two pairs of the projected light pulses P1 and P2 of the wide pulse interval and the narrow pulse interval are periodically switched one over to the other and the short measured distance is excluded when an error larger than a predetermined value occurs in the measured distances with those projected light pulses, the accurate detected distance can be obtained while the erroneous detection due to the composition of the reflected light from the rear object K is avoided.

Also, where the difference between the various measured distances is smaller than a predetermined value, the distance determining circuit 15 validates all of those measured distances and then determines the average value thereof as the detected distance. This means that even when no influence is brought about by the reflection of the rear object K, if the pulse interval between the projected light pulses is wide, noises of the light receiving circuit 9 superimposes on the received light waveform enough to reduce the determined distance than the actual distance and the influence brought about by this error is reduced because of the averaging. By so doing, in the case of the measurement without being affected by the influence of the reflection of the rear object K, there is no need to perform an excluding process to exclude the measured distance and, therefore, the length of time required to accomplish the measurement can be reduced.

It is to be noted that although in the embodiment hereinbefore fully described, the timing of the pulse detection has been described as chosen to be the rising edge of the pulse of the projected light and the received light, a falling edge of the pulse may be employed instead of the rising edge of the pulse. In such case, the distance determining circuit 15 determines the detected distance based on the measured distances in which the far measured distance has been excluded.

It is also to be noted that although in the embodiment hereinbefore fully described, the two pairs of the projected light pulses P1 and P2 of the two types of the wide and narrow pulse intervals have been generated by the two projecting light pulse generating circuits 6a and 6b, a plurality of pairs (3 or more pairs) of the projecting light pulses may be generated with the use of three or more projecting light pulse generating circuits. In such case, the response to a change in positional relation between the measurement object M and the rear object K will become high and the erroneous detection resulting from the influence of reflection of the rear object rearwardly of the measurement object can be further avoided.

As hereinabove described, in the present invention, the pairs of the projecting light pulses having the different pulse intervals are selectively projected and the detected distance is determined based on the plural measured distances in which either one of the far measured distance or the near measured distance is excluded in dependence on the timing of pulse detection. Accordingly, in the event that the measured distances differ from each other because of the influence brought about by reflection from the rear object rearwardly of the measurement object, the measured distance so affected by such influence is excluded and the detected distance can be obtained based on the measured distance free from such influence. Also, since the detected distance with no erroneous detection can be obtained if one of the far measured distance and the near measured distance is excluded, the length of time required to complete the measurement can be reduced. Therefore, regardless of the distance between the measurement object and the rear object, the erroneous detection, which would be brought about by the influence of reflection of the rear object rearwardly of the measurement object can be avoided with a simplified construction and the length of time required to complete the measurement can be reduced.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1:: Light projecting unit
- 2:: Light receiving unit
- 3:: Distance calculating unit
- 5:: Projecting light pulse generating unit
- 6a:: First projecting light pulse generating circuit
- 6b:: Second projecting light pulse generating circuit
- 7:: Projected light pulse selector circuit
- 8:: Light projecting circuit
- 9:: Light receiving circuit
- 15:: Distance determining circuit
- K:: Rear object
- M:: Measurement object

## Claims

1. An optical wave distance measurement device for sequentially projecting a plurality of pairs of projected light pulses, receiving light reflected from an object to be measured and measuring the distance to the object to be measured on the basis of a delay time of pulse detection during a period from projection of light to receipt of light, which device comprises:
a projected light pulse generating circuit for generating the plural pairs of the projected light pulses, which pairs have at least two pulse intervals different to each other among the plural pairs, each pair having respective predetermined pulse width;
a projected light pulse selector circuit for periodically selecting and outputting selected pair of the projected light pulses;
a light projecting circuit for projecting the selected projected light pulse towards the object to be measured; and
a distance determining circuit for comparing the farness or nearness of each of the measured distance, where the plural distances are measured one for each pair of the projected light pulses of the different pulse intervals, and determining a detected distance on the basis of the plural measured distances in which one of a far measured distance and a near measured distance is excluded in dependence on the timing of the pulse detection.

2. The optical wave distance measurement device as claimed in claim 1, in which where the timing of the pulse detection is a rising edge of the pulse of the light projection and the light receipt, the distance determining circuit determines the detected distance on the basis of the plural measured distances in which the near measured distance is exclude.

3. The optical wave distance measurement device as claimed in claim 1, in which when the difference between the measured distances is smaller than a predetermined value, the distance determining circuit determines an average value of all of those measured distances as the detected distance.
